**Europäisches Patentamt**

**European Patent Office**

**Office européen des brevets**

(19)

(11) Veröffentlichungsnummer: **0 451 602 B1**

# EUROPÄISCHE PATENTSCHRIFT

(12)

(45) Veröffentlichungstag der Patentschrift: **22.02.95**

(51) Int. Cl.6: **C08F 6/10**

(21) Anmeldenummer: **91104728.0**

(22) Anmeldetag: **26.03.91**

(54) **Kontinuierliches Verfahren zum Aufkonzentrieren von Polymerlösungen bis zu einem geforderten Spezifikationsgrad an Restlösungsmitteln.**

(30) Priorität: **07.04.90 DE 4011383**

(43) Veröffentlichungstag der Anmeldung:
**16.10.91 Patentblatt 91/42**

(45) Bekanntmachung des Hinweises auf die
Patenterteilung:
**22.02.95 Patentblatt 95/08**

(84) Benannte Vertragsstaaten:
**BE CH DE ES FR GB IT LI NL**

(56) Entgegenhaltungen:
**DE-A- 1 667 051**
**DE-A- 1 921 045**
**DE-B- 1 645 600**
**DE-B- 2 724 360**

(73) Patentinhaber: **BAYER AG**

**D-51368 Leverkusen (DE)**

(72) Erfinder: **Casper, Clemens, Dr.**
**Giesenweg 76**
**W-4150 Krefeld (DE)**
Erfinder: **Weinschenck, Jörgen, Dipl.-Ing.**
**Breiten Dyk 109**
**W-4150 Krefeld (DE)**

EP 0 451 602 B1

Rank Xerox (UK) Business Services
(3.10/3.09/3.3.3)

**Beschreibung**

Die Erfindung betrifft ein kontinuierliches Verfahren zum Aufkonzentrieren von Polymerlösungen bis zu einem geforderten Spezifikationsgrad an Restlösungsmitteln, wobei das Produkt unter Druck aufgeheizt und anschließend in einem Drosselorgan unter Dampfbildung in ein beheiztes Strömungsrohr hinein entspannt und dabei aufkonzentriert wird.

Bei der Aufkonzentrierung von Polymerlösungen bis zu Restlösungsmittelgehalten im ppm-Bereich stellen sich mehrere Probleme:

Polymere sind sehr empfindlich gegenüber hohen Temperaturen. Es kann zu Nachpolymerisation, Stippenbildung und Farbveränderungen kommen. Dementsprechend werden kurze Verweilzeiten für den Aufkonzentrierungsprozeß verlangt, was einen guten Warme- und Stoffaustausch voraussetzt. Zum Ende des Prozesses hin wird die Viskosität der Schmelze sehr hoch und kann Werte bis zu 1000 Pa.s annehmen. Die Spezifikationsanforderungen an Polymere liegen im allgemeinen bei Restlösungsmittelgehalten im ppm-Bereich. Dies bedingt, daß auch in der Endphase des Prozesses, wenn die Viskosität im Bereich 100 bis 1000 Pa.s liegt, noch eine gute Durchmischung des Produkts mit laufender Oberflächenerneuerung stattfindet. Bei zu langer Verweilzeit in dieser Prozeßphase mit den hohen Temperaturen würde das Produkt ansonsten thermisch stark geschädigt.

Es hat sich herausgestellt, daß man einen großen Teil des Aufkonzentrierungsprozesses auch in einem einfachen, beheizbaren Strömungsrohr, welches vorzugsweise stetig gewendelt ist, durchführen kann (DE-A-1 667 051 entsprechend GB-A-1 243 011 und DE-A-1 921 045 entsprechend GB-A-1 282 992). Hierbei wird eine Polymerlösung unter Überdruck aufgeheizt, über eine Düse bei Dampfbildung entspannt und das Dampf-Flüssigkeits-Gemisch anschließend durch das gewendelte Strömungsrohr gefördert, wobei das Produkt weiter aufkonzentriert wird, und zwar bis zu einem minimalen Restlösungsmittelgehalt von 1 Gew.-%. Dem Strömungsrohr folgt ein Zyklonabscheider, in dem die Brüden vom Polymer abgetrennt werden. Die Polymerschmelze wird dann einer Doppelwellenschneckenmaschine zugeführt, in der sie bis auf die Spezifikationsanforderung für das Restlösemittel gereinigt wird. Nachteilig bei diesem Verfahren ist der Abscheider und die Schneckenmaschine. Das Dampf-Flüssigkeits-Gemisch strömt mit hoher Geschwindigkeit, oft mit Schallgeschwindigkeit und nachfolgender Expansion, aus dem Strömungsrohr in den Abscheider hinein. Dabei spritzt das Produkt überall an die Wände und bleibt hier haften, weil die Scherkräfte fehlen, und es bauen sich so im Laufe der Zeit Krusten und vielfach auch Kustenberge auf. Ein Teil des Produktes kann auch in die Brüdenrohre mitgerissen werden und sich dort absetzen und die Rohre verstopfen. Deshalb nützt man oft die Aufkonzentrierungsmöglichkeiten im Wendelrohr nicht voll aus, sondern konzentriert dort nur so weit auf, daß das Produkt im folgenden Abscheider noch gut fließfähig ist.

Es besteht die Aufgabe, das Verfahren der eingangs genannten Art dahingehend zu verbessern, daß Krustenbildung vermieden und eine bessere Ausbeute erzielt wird.

Gelöst wird diese Aufgabe dadurch, daß im ersten Strömungsrohr die Aufkonzentrierung möglichst weitgehend durchgeführt wird, daß das Produkt dann unter einem Winkel in ein zweites, direkt nachgeordnetes, beheizbares Strömungsrohr, welches selbstreinigende Elemente und mindestens den 50-fachen Strömungsquerschnitt des ersten Strömungsrohres aufweist, eingebracht und auf die gewünschte Endkonsentration gebracht wird, und wobei die Abtrennung des Brüdenstromes vom Polymerstrom erst hinter dem zweiten Strömungsrohr erfolgt.

Beim ersten Strömungsrohr kann es sich um ein beliebiges handeln, beispielsweise ein langes gerades, ein mäanderförmiges oder vorzugsweise um ein stetig gewendeltes Strömungsrohr.

Als zweites Strömungsrohr wird entweder ein Drehrohr mit einer selbstreinigenden Messerwelle oder ein selbstreinigender Paddelschneckenapparat verwendet.

Der Hauptvorteil des vorgeschlagenen Verfahrens besteht darin, daß Abscheidungs- und und Reinigungsprozeß in einem Apparat zusammengefaßt sind. Dabei entfällt das Problem der Krustenbildung im Abscheider und man kann im ersten Strömungsrohr wirklich so weit aufkonzentrieren, wie es der Apparat zuläßt. Der aus dem ersten Strömungsrohr mit hoher Strömungsgeschwindigkeit austretende Dampf-Flüssigkeitsstrahl trifft direkt auf die Wand des zweiten Strömungsrohres bzw. die Paddelschnecken. Dabei wird die Strahlenergie gebrochen. Das klebrige Polymer scheidet sich an den Wanden ab und wird von dort durch die schabenden Elemente und die Rohrneigung zum Auslaß weitergeführt, wobei die Restaufkonzentrierung stattfindet. Der Dampfstrahl wird umgelenkt, verliert auf dem Wege zum Auslaß infolge des gegenüber dem ersten Strömungsrohr wesentlich vergrößerten Strömungsquerschnittes weitgehend seine kinetische Energie und ist damit nicht mehr in der Lage, etwa mitgerissene Flüssigkeitströpfchen zu halten, die dann ebenfalls an der Wand oder an den Schaberelementen abgeschieden werden.

Ein weiterer Vorteil des Verfahrens besteht darin, daß die verwendeten Apparaturen wesentlich kostengünstiger sind als eine Doppelwellenschneckenmaschine. Außerdem besitzen sie ein noch günstigeres Oberflächen-/Volumenverhältnis.

In einigen Fällen kann es möglich sein, daß zu wenig Lösemittel vorhanden ist, um den Prozeß durchzuführen oder der geforderte Spezifikationsgrad trotz aller eingeleiteter Maßnahmen nicht erreicht wird.

In diesem Falle empfiehlt es sich, Inertgas oder Fremddampf mit in das erste Strömungsrohr einzuspeisen.

Im allgemeinen reichen schon geringe Mengen aus, die Spezifikationsanforderungen zu erfüllen. Es ist vorteilhaft, das Inertgas bzw. Fremddampf zusammen mit der Polymerlösung durch das Drosselorgan in das erste Strömungsrohr einzudüsen.

In der Zeichnung sind zwei Anlagen zur Durchführung des neuen Verfahrens rein schematisch dargestellt und nachstehend näher beschrieben. Es zeigen:

Fig. 1    eine erste Anlage mit einem Drehrohr als zweites Strömungsrohr,

Fig. 2    eine zweite Anlage mit einer Paddelschnecke als zweites Strömungsrohr und

Fig. 3    einen Schnitt gemäß Linie A,B in Fig. 2.

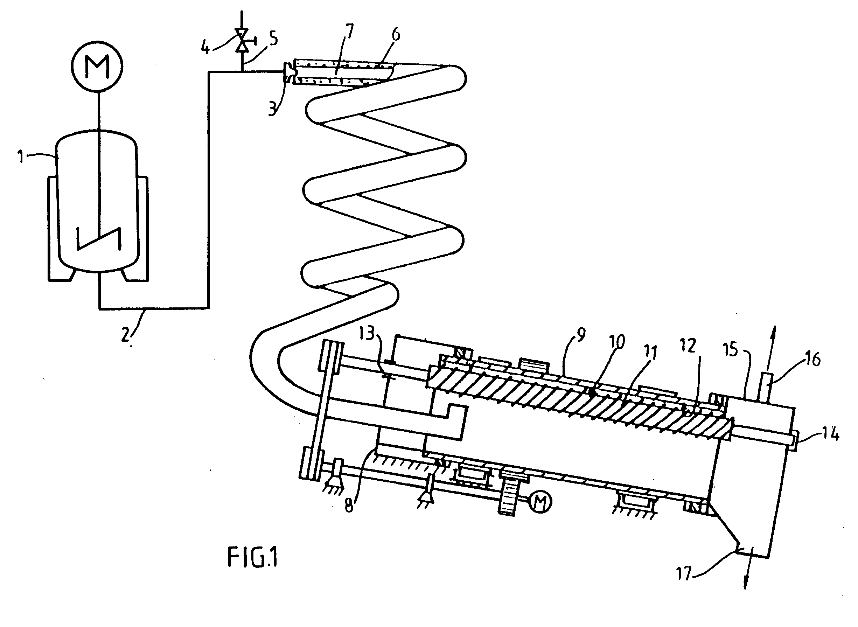

In Fig. 1 gelangt von einem beheizbaren Behälter 1 eine Polymerlösung über eine Leitung 2 in ein als Entspannungsdüse ausgebildetes Drosselorgan 3, vor welchem noch eine mit einem Absperrventil 4 versehene Inertgasleitung 5 in die Leitung 2 einmündet. Die Entspannungsdüse 3 ist am Eingang eines mit einem Heizmantel 6 versehenen, als stetige Wendel von 20° Neigung ausgebildeten Strömungsrohr 7 angeordnet. In diesem Strömungsrohr 7 wird die Polymerlösung weiter aufkonzentriert. Mit einer mittleren Austrittsgeschwindigkeit von 80 m/s wird dieses Gemisch aus Konzentrat und Brüden senkrecht gegen die Innenwandung 12 eines als Drehrohr ausgebildeten Strömungsrohres 9 geschleudert, dessen Strömungsquerschnitt das 80-fache desjenigen des Strömungsrohres 7 beträgt. Im Drehrohr 9 ist in Drehrichtung etwa 50° hinter der Scheitellinie eine gegensinnig zum Drehrohr 9 angetriebene Messerwelle 10 vorgesehen, deren Messer 11 schraubenlinienförmig gestaltet sind und die Innenwandung 12 des Drehrohres 9 abkratzen. Die Messerwelle 10 besitzt eine Lagerung 13 in der Kopfschale 8 und eine Lagerung 14 in der Fußschale 15. Innerhalb des Drehrohres 9 erreicht das Produkt den gewünschten Konzentrationsgrad. Die Brüden verlassen die Fußschale 15 durch einen Abzug 16 und das Produkt durch einen Auslaß 17.

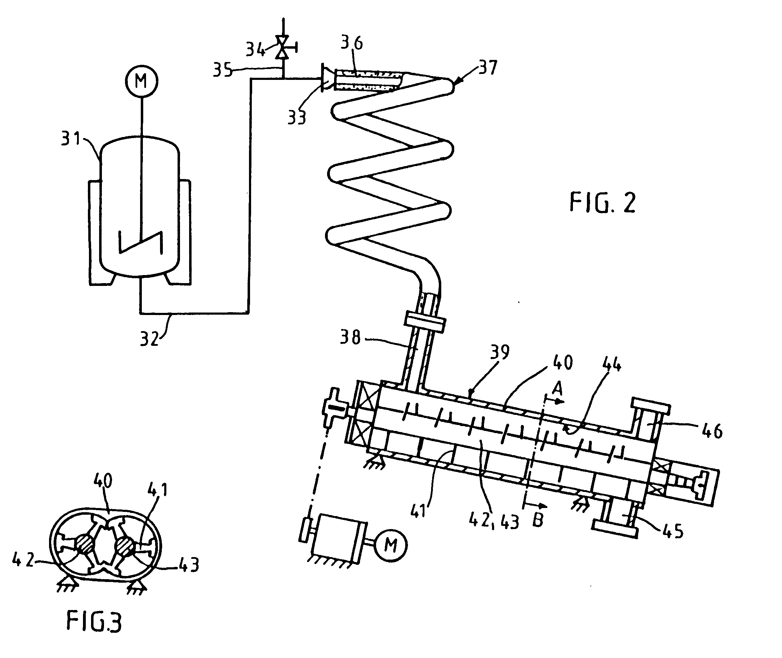

In Fig. 2 und 3 gelangt von einem beheizbaren Behälter 31 eine Polymerlösung über eine Leitung 32 in ein als Entspannungsdüse ausgebildetes Drosselorgan 33, vor welchem noch eine mit einem Absperrventil 34 versehene Fremddampfleitung 35 in die Leitung 32 einmündet. Die Entspannungsdüse 33 ist am Eingang eines mit einem Heizmantel 36 versehenen, als stetige Wendel von 25° Neigung ausgebildeten, ersten Strömungsrohr 37 angeordnet. In diesem Strömungsrohr 37 wird die Polymerlösung weiter aufkonzentriert. Mit einer mittleren Strömungsgeschwindigkeit von 60 m/s gelangt dieses Gemisch aus Konzentrat und Brüden durch einen Einlaßstutzen 38 senkrecht in ein zweites, als Paddelschneckenapparat ausgebildetes Strömungsrohr 39, dessen Querschnitt das 80-fache desjenigen des ersten Strömungsrohres 37 beträgt. Der Paddelschneckenapparat 39 weist ein beheizbares Gehäuse 40 auf, in welchem zwei gegensinnig drehende, miteinander kämmende, mit unter 10° angestellten Paddeln 41 besetzte Wellen 42 und 43 angeordnet sind. Die Paddel 41 schaben die Innenwandung 44 des Gehäuses 40 und sich gegenseitig laufend ab und verhindern auf diese Weise Anbackungen und Verkrustungen. Das auf den gewünschten Grad aufkonzentrierte Produkt wird über einen Auslaß 45 ausgetragen und die Brüden ziehen über einen Abzugsstutzen 46 ab.

Beispiele

Beispiel 1

Aufkonzentrierung einer Polydimethylsiloxan-Chlorbenzol-Lösung

Durchsatz: 29 kg/h

Ausgangszusammensetzung:

| | | |
|---|---|---|
| | Polydimethylsiloxan | 20 Gew.-%; |
| | Chlorbenzol | 80 Gew.-% |

Viskosität Polydimethylsiloxan: 1000 mPa.s (20°C)

Erstes Strömungsrohr: gewendeltes Strömungsrohr

| | |
|---|---|
| Rohrinnendurchmesser | 15 mm |
| Strömungsquerschnitt | 177 mm$^2$ |
| Rohrlänge | 6 m |
| Wendeldurchmesser | 250 mm |
| Steigung | 20° |
| Heizmittel | thermisch isomere Benzyltoluole (Handelsname Marlothermöl) |
| Heizmitteltemperatur | 300°C |
| Systemdruck | 1 bar$_a$ |
| Drosselorgan am Eintritt des ersten Strömungsrohres | geregeltes Nadelventil |
| Produkttemperatur vor Drosselorgan | 200°C |
| Produkttemperatur hinter Drosselorgan | 160°C |
| Zweites Strömungsrohr: | Paddelschneckenapparat |
| Gehäuselänge | 2300 mm |
| Wellendurchmesser | 45 mm |
| Paddeldurchmesser | 130 mm |
| Schrägstellung der Paddel | 5° |

EP 0 451 602 B1

| Neigung des Paddelschneckenapp. | 10° |
| Drehzahl | 71 U/min |
| Strömungsquerschnitt | $13\,000\ mm^2$ |
| Heizmittel | Marlothermöl |
| Heizmitteltemperatur | 300°C |
| Restlösemittelgehalt | ~400 ppm |

Beispiel 2

Aufkonzentrierung einer Polydimethylsiloxan-Chlorbenzol-Lösung mit Zusatz von Inertgas

| Durchsatz: | Lösung:<br>Inertgas: | 30 kg/h<br>10kg/h |
|---|---|---|
| Ausgangszusammensetzung: | | |
| Polydimethylsiloxan:<br>Chlorbenzol: | | 80 Gew.-%<br>20 Gew.-% |

Alle anderen Bedingungen wie im Beispiel 1.

| Restlösemittelgehalt: | ~2500 ppm |
|---|---|

Beispiel 3

Aufkonzentrierung einer Polydimethylsiloxan-Chlorbenzol-Lösung

| Durchsatz: | 30 kg/h |
|---|---|
| Ausgangszusammensetzung: | |
| Polydimethylsiloxan:<br>Chlorbenzol:<br>Viskosität Polydimethylsiloxan: | 20 Gew.-%<br>80 Gew.-%<br>500 000 mPa.s |

Alle anderen Bedingungen wie im Beispiel 1.

| Restlösemittelgehalt: | ~25000ppm≙2,5 Gew.-%. |
|---|---|

Mit Zusatz von 12 kg/h Stickstoff Restlösemittelgehalt: ~3000 ppm.

Beispiel 4

Wie Beispiel 1, jedoch wird als zweites Strömungsrohr anstelle des Paddelschneckenapparates ein Drehrohr verwendet:

| Gehäuselänge | 1000 mm |
|---|---|
| Drehrohrdurchmesser | 200 mm |
| Durchmesser der Schabemesser | 50 mm |
| Neigung des Drehrohres | 10° |
| Drehzahl | 30 U/min |
| Strömungsquerschnitt | 13 000 mm² |
| Heizmittel | Marlothermöl |
| Heizmitteltemperatur | 300°C |
| Restlösemittelgehalt | 500 ppm |

**Patentansprüche**

1. Kontinuierliches Verfahren zum Aufkonzentrieren von Polymerlösungen bis zu einem geforderten Spezifikationsgrad an Restlösungsmittel, wobei das Produkt unter Druck aufgeheizt und anschließend in einem Drosselorgan (3, 33) unter Dampfbildung in ein beheiztes Strömungsrohr (7, 37) hinein entspannt und darin aufkonzentriert wird, dadurch gekennzeichnet, daß in diesem ersten Strömungsrohr (7, 37) die Aufkonzentrierung möglichst weitgehend durchgeführt wird, und daß das Produkt dann unter einem Winkel in ein zweites, direkt nachgeordnetes beheizbares Strömungsrohr (9, 39), welches selbstreinigende Elemente (10;11;41,42,43) und mindestens den 50-fachen Strömungsquerschnitt des ersten Strömungsrohres (7, 37) aufweist, eingebracht und auf die gewünschte Endkonzentration gebracht wird, und wobei die Abtrennung des Brüdenstromes vom Polymerstrom erst hinter dem zweiten Strömungsrohr (9,39) erfolgt.

2. Verfahren nach Anspruch 1, dadurch gekennzeichnet, daß als zweites Strömungsrohr (9) ein Drehrohr (9) mit einer selbstreinigenden Messerwelle (10) verwendet wird.

3. Verfahren nach Anspruch 1, dadurch gekennzeichnet, daß als zweites Strömungsrohr (39) ein selbstreinigender Paddelschneckenapparat (39) verwendet wird.

4. Verfahren nach einem der Ansprüche 1 bis 3, dadurch gekennzeichnet, daß zusammen mit der Polymerlösung Inertgas in das erste Strömungsrohr (7) eingespeist wird.

5. Verfahren nach einem der Ansprüche 1 bis 3, dadurch gekennzeichnet, daß zusammen mit der Polymerlösung Fremddampf in das erste Strömungsrohr (37) eingespeist wird.

**Claims**

1. Continuous method for the concentrating of polymer solutions to a required specification level of residual solvents, wherein the product is heated up under pressure and subsequently expanded in a restricting organ (3, 33) with vapour formation into a heated flow tube (7, 37) and concentrated there, characterised in that in said first flow tube (7, 37) the concentrating is carried out to the greatest possible extent, and that the product is then introduced at an angle into a second heatable flow tube (9, 39) arranged directly downstream, which exhibits self-cleaning elements (10; 11; 41, 42, 43) and at least 50 times the flow area of the first flow tube (7, 37), and is brought to the desired final concentration, and wherein the separation of the vapour flow from the polymer flow does not take place until after the second flow tube (9, 39).

2. Method according to claim 1, characterised in that there is used as second flow tube (9) a revolving tube (9) with a self-cleaning cutter spindle (10).

3. Method according to claim 1, characterised in that there is used as second flow tube (39) a self-cleaning paddleworm apparatus (39).

4. Method according to any one of claims 1 to 3, characterised in that together with the polymer solution inert gas is fed into the first flow tube (7).

**5.** Method according to any one of claims 1 to 3, characterised in that together with the polymer solution foreign vapour is fed into the first flow tube (37).

**Revendications**

**1.** Procédé continu pour concentrer des solutions de polymère jusqu'à un degré de spécification indiquée en du solvant résiduel, procédé selon lequel le produit est chauffé sous pression puis est détendu dans un organe d'étranglement (3, 33) avec formation de vapeur dans un tube (7, 37) chauffé à écoulement et y est concentré, procédé caractérisé en ce qu'on conduit aussi loin que possible la concentration dans le premier tube à écoulement (7, 37) et en ce que le produit est introduit ensuite, sous un certain angle, dans un second tube à écoulement (9, 39) pouvant être chauffé et disposé immédiatement à la suite, ce second tube comportant des éléments auto-nettoyants (10 ; 11 ; 41, 42, 43) et ayant une section d'écoulement représentant au moins 50 fois celle du premier tube à écoulement (7, 37), et le produit y est amené à la concentration finale voulue, et la séparation du courant des brouillards et vapeurs d'avec le courant du polymère n'a lieu qu'en aval du second tube à écoulement (9, 39).

**2.** Procédé selon la revendication 1, caractérisé en ce qu'on utilise comme second tube à écoulement (9), un tube rotatif (9) comportant un arbre (10) auto-nettoyant à lames.

**3.** Procédé selon la revendication 1, caractérisé en ce qu'on utilise comme second tube à écoulement (39) un appareil (39) auto-nettoyant à vis munie(s) d'ailettes.

**4.** Procédé selon l'une des revendications 1 à 3, caractérisé en ce qu'on introduit, avec la solution du polymère, du gaz inerte dans le premier tube à écoulement (7).

**5.** Procédé selon l'une des revendications 1 à 3, caractérisé en ce qu'on introduit, avec la solution du polymère, de la vapeur étrangère dans le premier tube à écoulement.

FIG.1

FIG.2

FIG.3